# EUROPÄISCHE PATENTSCHRIFT

(11) **EP 4 396 548 B1**
(45) Veröffentlichungstag und Bekanntmachung des Hinweises auf die Patenterteilung: **13.05.2026**
(21) Anmeldenummer: 21786754.8
(22) Anmeldetag: 31.08.2021
(51) Int. Cl.: G01J 5/00, B01F 29/10, B01F 35/21, G01J 5/07, G01J 5/02

(54) **VORRICHTUNG ZUR TEMPERATURBESTIMMUNG VON MISCHGUT IN EINEM ROTATIONSMISCHER**
DEVICE FOR DETERMINING THE TEMPERATURE OF A MIXTURE IN A ROTARY MIXER
DISPOSITIF DE DÉTERMINATION DE TEMPÉRATURE D'UN MÉLANGE DANS UN MÉLANGEUR ROTATIF

(43) Veröffentlichungstag der Anmeldung: 10.07.2024
(73) Patentinhaber: Hauschild GmbH & Co. KG, 59075 Hamm (DE)
(72) Erfinder: EITZEN, Theodor, 59075 Hamm (DE); ADAM, Patrick, 48317 Drensteinfurt (DE)
(74) Vertreter: Kayser, Christoph
(86) Internationale Anmeldenummer: PCT/DE2021/000144
(87) Internationale Veröffentlichungsnummer: WO 2023/030564

(56) Entgegenhaltungen:
- WO-A1-2020/170772
- DE-T5- 112018 005 502
- US-A- 5 951 164

## Beschreibung

Die vorliegende Erfindung betrifft eine Vorrichtung zur Temperaturbestimmung des Mischguts in einem Rotationsmischer.

Die Temperaturbestimmung von Mischgut erlaubt Aussagen über den Zustand des Mischguts und damit auch darüber, ob die angestrebte Durchmischung bereits erreicht wurde oder ob noch weiteres Mischen erfolgen muss. Die kontinuierlich Aufzeichnung der Mischguttemperatur im Mischprozess ist darüber hinaus als In-Prozess-Kontrolle geeignet und kann unerwünschte Abweichungen während des Mischens schnell identifizierbar machen ebenso wie Entmischungsvorgänge durch zu langes Mischen.

In der Literatur zum Stand der Technik finden sich in der Hauptsache Messtechniken, die einen direkten Kontakt eines Messfühlers mit dem Mischgut erfordern. Die DE 1 257 113 A offenbart einen Mischer für feinkörniges, pulverförmiges oder flüssiges bzw. breiiges Gut mit einem aufrecht stehenden zylinderförmigen, verschließbaren Mischbehälter und konzentrisch in ihm angeordneten, hochtourig umlaufenden Mischwerkzeugen. Sie stellt sich unter anderem die Aufgabe, in besonders einfacher und geeigneter Weise die laufend ansteigende tatsächliche Temperatur des Mischgutes während des Mischvorganges festzustellen. Vorgeschlagen wird, einen Umlenker für das Mischgut im Querschnitt als einen sich in Drehrichtung der Mischwerkzeuge verjüngenden Körper mit Zufuhrleitungen für Flüssigkeiten und/oder Gase und einem Thermometer auzubilden. Bei einer praktischen Ausführungsform ist in dem Umlenker ein Thermometerfühler angeordnet, der nahe dem unteren Ende des Umlenkers an der der Behälterwand zugewandten Seite aus dem Umlenker herausragt. Dabei verläuft der Fühler schräg nach unten und im spitzen Winkel zur Behälterwand. Der Fühler ragt nach vorn aus dem Umlenker in einer derartigen Richtung heraus, dass das in Drehung versetzte und nach oben gedrückte Mischgut praktisch senkrecht auf die Spitze des Fühlers auftrifft. Dadurch wird vermieden, dass sich Mischgut an toten Zonen des Fühlers absetzt und somit eine wärmeisolierende Schicht auf der Fühleroberfläche bildet, die eine weitgehend verzögerungsfreie und genaue Anzeige des Thermometers unmöglich macht. Die Messleitung des Fernthermometers ist durch den Hohlraum des Umlenkers geführt.

Die DE 10 113 451 A1 offenbart ein Lagergehäuse für eine Rührwelle, an der vorzugsweise eine Rührscheibe befestigt ist, mit einer Lanze, die mit einem Ende mit dem Lagergehäuse in Verbindung steht und an deren anderem Ende ein Temperatursensor angeordnet ist, mit einer Zuleitung für den Temperatursensor, die zumindest bereichsweise durch das Lagergehäuse geführt ist und die sich zumindest bereichsweise durch die Lanze bis zum Temperatursensor erstreckt. Bevorzugt ist die Lanze mit einer Sollbruchstelle versehen. Auch hier besteht das Problem, dass ein Teil der Temperaturmesseinrichtung, in diesem Falle die Lanze, im Rührgefäß angeordnet und dementsprechend dem Risiko des Einwirkens übermäßiger mechanischer Kräfte ausgesetzt ist.

Die DE 10 2008 041 104 A1 offenbart zunächst eine Mischvorrichtung, die einen zumindest teilweise aus einem elektrisch leitfähigen, vorzugsweise metallischen Material besteht. Mittels einer Heizvorrichtung, die mindestens eine mit einem elektrischen Wechselfeld anregbare Spule aufweist, die derart angeordnet ist, dass durch die bei verändertem Stromfluss entstehende Magnetfeldänderung im elektrisch leitfähigen Material des Mischbehälters Wirbelströme erzeugt werden, kann der Mischbehälter und das in ihm enthaltene Mischgut schnell aufgeheizt werden, da die Wirbelströme für eine Erwärmung des Mischbehälters sorgen. In einer bevorzugten Ausführungsform ist im Inneren des Behälters in der Nähe der Behälterwand und/oder dem Behälterboden mindestens eine Abstreifvorrichtung vorgesehen, die relativ zur Behälterwand bewegbar ist. Im einfachsten Fall ist die Abstreifvorrichtung statisch, so dass die notwendige Relativbewegung nur durch das Drehen des Behälters erzeugt wird. Die Temperatur des Mischguts kann nun gemäß der DE 10 2008 041 104 A1 durch einen Temperatursensor erfasst werden, der in der Abstreifvorrichtung aufgenommen ist, da diese in direktem Kontakt mit dem Mischgut steht. Alternativ kann die Mischguttemperaturbestimmung auch über einen getrennt von der Abstreifvorrichtung in den Mischraum eingebrachten produktberührenden oder berührungslosen Temperatursensor erfolgen. Auch hier befindet sich der Temperatursensor in jedem Falle in dem Mischbehältnis.

Ein weiterer Rotationsmischer mit einem mitbewegten pyrometrischen Temperatursensor ist aus der US5951164 A bekannt.

Nachteilig am Stand der Technik ist der Umstand, dass sämtliche Temperatursensoren bisher in dem Mischbehältnis positioniert sind. Bei hohen Drehzahlen, wie sie in Rotationsmischern auftreten können, sind die entsprechenden Temperatursensoren daher hohen Zentrifugalkräften ausgesetzt und die elektronische Anbindung oder Verkabelung kann einen hohen Wartungsaufwand oder einen häufig erforderlichen Austausch der Sensoren bedingen. Zudem können sich Messungenauigkeiten ergeben, wenn es nicht gelingt, einen Materialfluss entlang des Sensors zu generieren, da am Sensor festgebackenes Mischgut wärmeisolierend wirken kann. Ein brührungslos messender Sensor, bei der der Sensor gleichwohl in dem Mischbehältnis positioniert ist, müsste unbedingt so positioniert sein, dass eine Verschmutzung mit Mischgut ausgeschlossen werden kann, was einen hohen konstruktiven Aufwand bedingen würde, der zudem je nach Mischer individuelle Anpassungen erforderlich machen würde.

Es stellt sich daher die Aufgabe, eine Vorrichtung bereit zu stellen, die die erwähnten Nachteile des Stands der Technik aufhebt und insbesondere für Rotationsmischer, die eine hohe mechanische Belastung sämtlicher Bauteile aufweisen, geeignet ist.

Gelöst wird diese Aufgabe durch einen Rotationsmischer nach Anspruch 1 oder durch ein Verfahren nach Anspruch 11, bei dem ein Rotationsmischer nach Anspruch 1 zum Einsatz kommt. Vorteilhafte Ausführungen ergeben sich aus den jeweiligen Unteransprüchen.

Vorgestellt wird eine Vorrichtung zur Temperaturbestimmung von Mischgut in einem Rotationsmischer mit einem Gehäuse und mit einem auf einer Kreisbahn in verschiedene Rotationspositionen beweglichen Mischbehältnis, das eine Mischgutaufnahme mit einem Boden und einer Seitenwandung aufweist und als Rotationskörper mit einer schräg zu der Ebene der Kreisbahn und orthogonal zu dem Boden angeordneten Symmetrieachse ausgeführt ist, wobei das Mischbehältnis um die Symmetrieachse drehbar gelagert ist und die Vorrichtung in einem Ruhezustand kein Mischgut aufweist und in einem Arbeitszustand, in dem das Mischbehältnis mit Mischgut befüllt ist, auf der Kreisbahn rotiert, wobei an dem Gehäuse ein berührungslos messender Strahlungsdetektor ortsfest angeordnet ist, der auf die Kreisbahn gerichtet ist. Der Strahlungsdetektor ist vorzugsweise Teil eines Pyrometers, das Infrarotstrahlung detektiert. Grundsätzlich können aber auch andere Detektoren zum Einsatz kommen, die aufgrund der Reflexion elektromagnetischer Strahlung Rückschlüsse auf die Temperatur des Mischguts erlauben und auf diese Weise berührungslos arbeiten.

Kern des Strahlungsdetektors ist vorzugsweise ein Strahlungssensor, auf den einfallende Strahlung bevorzugt durch eine geeignete Linse fokussiert wird. Dabei hängt das Ausmaß der von dem Strahlungsdetektor maximal erfassten Fläche als Messfleck auf einem Messobjekt, hier also dem Mischgut, proportional von dem Abstand zwischen dem Strahlungsdetektor und dem Messobjekt ab. Je größer also der Abstand des Strahlungsdetektors und damit auch des Strahlungssensors von dem Mischgut, desto größer die Fläche des Messflecks.

Selbstverständlich kann der Strahlungsdetektor nicht beliebig ausgerichtet sein. Um die Mischguttemperatur mit ausreichender Genauigkeit zu erfassen, ist er zumindest auf die Kreisbahn gerichtet, auf der sich das Mischbehältnis im Arbeitszustand bewegt. Von Vorteil ist es jedoch, wenn der Messfleck in dem Ruhezustand in wenigstens einer Rotationsposition vollständig in der von der Ebene der Kreisbahn am weitesten beabstandeten Hälfte der Oberfläche des Bodens innerhalb der Mischgutaufnahme liegt und in dem Arbeitszustand wenigstens ein Teil des Mischguts in einer oder mehreren Rotationspositionen vollständig in den Strahlengang des Strahlungsdetektors eingebracht ist. Dabei ist zu berücksichtigen, dass beispielsweise im Ruhezustand auf der gesamten Oberfläche des Bodens der Mischgutaufnahme verteiltes Mischgut im Zuge der Rotation, also in dem Arbeitszustand der Vorrichtung, durch Zentrifugalkräfte in Richtung des jeweils obenliegenden Randes der Mischgutaufnahme verschoben wird und dabei Teile des Bodens sowie der nach oben angrenzenden Behältniswandung bedeckt. Im Regelfall führt die Mischgutaufnahme in dem Mischbehältnis eine Gegenrotation zu der Bewegung des Mischbehältnisses auf der Kreisbahn aus, um ein Anhaften von Mischgut an der Behältniswandung zu vermeiden. Die Mischgutaufnahme ist zudem meist auf einfache Art austauschbar.

Besonders bevorzugt ist es, wenn der Abstand des Strahlungsdetektors von dem Boden der Mischgutaufnahme so gewählt ist, dass der kreisförmige Messfleck auf dem Boden der Mischgutaufnahme einen Durchmesser aufweist, der nicht größer als der Radius des Bodens ist. Der Messfleck kann so vollständig in der oberen Hälfte des Bodens positioniert werden.

Da auch ein bevorzugt ausgerichteter Strahlungsdetektor ohne hochpräzises Timing nicht nur die Temperatur des Mischguts detektiert sondern auch die Umgebung des Mischbehältnisses, die kein Mischgut aufweist, ist es von Vorteil, wenn der Strahlungsdetektor mit einer Datenverarbeitungseinheit verbunden ist. Die Datenverarbeitungseinheit ist vorteilhafterweise dazu eingerichtet, die von dem Strahlungsdetektor empfangenen Dateneinheiten aufzuzeichnen, aus den Dateneinheiten Einzeltemperaturwerte zu errechnen sowie das jeweilige Maximum der Einzeltemperaturwerte in vorgegebenen Zeitabschnitten zu bestimmen. Dabei ist es insbesondere von Vorteil, wenn auch lokale Maxima einer Serie von Temperaturwerten ausgegeben werden können, so dass zwischen Mischgut und möglicherweise anderen Temperaturpeaks, die beispielsweise durch Fehlfunktionen des Rotationsmischers verursacht sein könnten, unterschieden werden kann. So kann auch eine Notabschalt- oder Warnvorrichtung an das Erreichen eines bestimmten Schwellenwertes gekoppelt werden.

Schließlich ist es von Vorteil und zumeist unabdingbar, dass die Datenverarbeitungseinheit dazu eingerichtet ist, die Einzeltemperaturwerte unter Vorgabe des Emissionsgrades des Mischguts zu errechnen. Da in vielen Anwendungsfällen nur geringe Unterschiede des zu mischenden Gutes auftreten, ist die erneute Voreinstellung des Emissionsgrades nur bei grundsätzlichem Wechsel des Mischguts erforderlich.

Bei Mischvorgängen, für die Unterdruck gegenüber Normaldruck erforderlich ist, kann der Strahlungsdetektor ortsfest so am oder im Gehäuse angebracht werden, dass er zusammen mit dem Temperaturdetektor in einem Raum angeordnet ist, der so abdichtbar ist, dass ein gleichmäßiger Unterdruck gegenüber Normaldruck in ihm erzeugbar ist, von dem das Mischgut und der Strahlungsdetektor gleichermaßen erfasst sind. Dies hat den Vorteil, dass zwischen Mischgut und Strahlungsdetektor kein Deckel positioniert sein muss, der auch bei transparenten Scheiben Einfluss auf die Messung hätte. Bei Mischvorgängen, die zwingend eine Abdeckung erfordern, in der Praxis zumeist einen das Mischbehältnis verschließenden Deckel, kann in den Deckel eine Germaniumscheibe eingebaut werden, die in wenigstens einer Rotationsposition des Mischbehälters in dem Strahlengang des Strahlungsdetektors positioniert ist. Germaniumscheiben können so ausgeführt sein, dass sie keinen Einfluss auf die Messung haben.

Ein Verfahren, das die vorgeschlagene Vorrichtung zur Temperaturbestimmung nutzt, umfasst folgende Schritte:
i) Befüllung des Mischbehältnisses mit dem Mischgut und Positionierung des Mischguts im Strahlengang des Strahlungsdetektors mit anschließender Bestimmung der Temperatur des Mischguts in Ruhe als T₀ mittels der Datenverarbeitungseinheit;
ii) Überführung der Vorrichtung in den Arbeitszustand mit einer Drehzahl der Rotation des Mischbehälters auf der Kreisbahn von mehr als einer vorbestimmten Anzahl von Umdrehungen pro Minute (rpm);
iii) punktuelle Messungen der Mischguttemperatur in regelmäßigen Zeitabständen;
iv) Bestimmung der maximal gemessenen Mischguttemperatur nach einer vorbestimmten Anzahl von Umdrehungen.
Auf diese Weise kann auch aufgezeichnet werden, wie schnell die Temperatur in Mischgütern mit hohem Reibstoffanteil ansteigt und die Rotationsgeschwindigkeit, oder auch eine Kühlung, kann zur Optimierung des Mischvorgangs entsprechend angepasst werden. Dazu ist es von Vorteil, Temperaturmaxima immer nach einer bestimmten Anzahl von Umdrehungen des Mischbehältnisses auf der Kreisbahn zu bestimmen, als Graph aufzuzeichnen und auszuwerten.

Von Bedeutung ist, dass die Temperaturbestimmung mittels des Strahlungsdetektors punktuell stattfindet, so dass zwischen den einzelnen Bestimmungen eine messfreie Zeitspanne liegt. Während der messfreien Zeitspanne, also dem Zeitabstand zwischen den einzelnen Messungen rotiert das Mischgutbehältnis weiter und legt je nach Drehzahl, die in der Regel in Umdrehungen pro Minute (rpm) angegeben wird, eine bestimmte Strecke zurück. Um eine gute Genauigkeit der Messungen zu erreichen ist es daher von Vorteil, wenn die während des Zeitabstands zurückgelegte Strecke nicht größer als der Radius des Bodens der Mischgutaufnahme ist, um eine hohe Wahrscheinlichkeit zu gewährleisten, dass eine Messung im Arbeitszustand der Vorrichtung stattfindet, in der der Messfleck ausschließlich Mischgut erfasst. Der Wert des in Millisekunden angegebenen Zeitabstands zwischen den punktuellen Messungen sollte daher vorzugsweise nicht größer sein als der Quotient aus dem Radius des Bodens der Mischgutaufnahme und einem mit dem Umfang der Kreisbahn multiplizierten 60.000stel der Drehzahl (rpm).

Nachfolgend wird die vorgestellte Vorrichtung anhand der Zeichnung beispielhaft erläutert ohne auf dieses Beispiel beschränkt zu sein.

### Legende:

- 1: Vorrichtung zur Temperaturbestimmung
- 2: Rotationsmischer
- 3: Gehäuse
- 4: Strahlungsdetektor
- 5: Strahlungssensor
- 6: Pyrometer
- 7: Boden
- 8: Seitenwandung
- 9: Mischgutaufnahme
- 10: Mischbehältnis
- 11: Symmetrieachse
- 12: Radius des Bodens
- 13: Mischgut
- 14: Kreisbahn
- 15: Ebene der Kreisbahn
- 16: Hauptrotationsachse
- 17: Strahlengang
- 18: Messfleck
- 19: Deckel
- 20: Germaniumscheibe

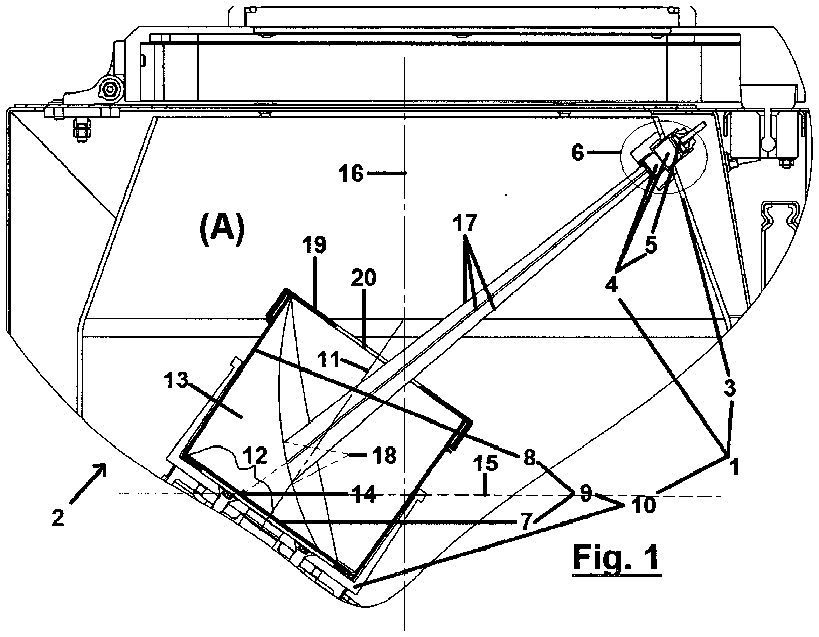

**Fig. 1** zeigt einen Ausschnitt eines Rotationsmischers (2) im Querschnitt, der eine Vorrichtung zur Temperaturbestimmung (1) aufweist, bestehend aus einem ortsfesten Gehäuse (3) und einem Strahlungsdetektor (4) mit einem Strahlungssensor (5) als Teil eines Pyrometers (6) sowie einem Mischbehältnis (10), das einen Boden (7), eine Seitenwandung (8) und eine leicht auswechselbare Mischgutaufnahme (9) aufweist. Das Mischbehältnis (10) ist auf einer Kreisbahn (14), die den Schnittpunkt des Zentrums des Strahlengangs (17) mit dem Boden (7) durchläuft und hier als Punkt dargestellt ist, um eine Hauptrotationsachse (16) in verschiedene Rotationspositionen bewegbar, wobei das Mischbehältnis (10) als Rotationskörper ausgeführt ist, dessen Symmetrieachse (11) orthogonal zu dem Boden (7) und schräg zu der Ebene (15) der Kreisbahn (14) angeordnet ist. Der Strahlungsdetektor (4) ist so an dem ortsfesten Gehäuse (3) angeordnet, dass der Strahlengang (17) des Pyrometers (6) auf die Kreisbahn (14) gerichtet ist. Gezeigt ist hier die Vorrichtung (1) in ihrem Arbeitszustand (A), in dem das Mischbehältnis (10) auf der Kreisbahn (14) rotiert und die Mischgutaufnahme (9) mit Mischgut (13) befüllt ist, das hier aufgrund der durch die Rotation des Mischbehältnisses (10) um die Rotationshauptachse (16) auftretenden Zentrifugalkräfte in Richtung der oberen Hälfte der Mischgutaufnahme (9) verschoben ist. In der gezeigten Rotationsposition des Mischbehältnisses (10) befindet sich der Messfleck (18) vollumfänglich auf dem Mischgut (13) und würde im Ruhezustand (R) (hier nicht gezeigt), also in Abwesenheit des Mischguts (13) auf die obere Hälfte des Bodens (7) der Mischgutaufnahme (9) treffen. Dies ist möglich, da der Durchmesser des kreisförmigen Messflecks (18) kleiner ist als der Radius des Bodens (7). Vorliegend ist zusätzlich der optionale Deckel (19) gezeigt, der die Mischgutaufnahme (9) verschließt und so ein Entweichen beispielsweise feinpulvriger Substanzen wirksam verhindert. Der Strahlengang (17) ist dabei so ausgerichtet, dass er in wenigstens einer Rotationsposition des Mischbehältnisses (10) vollumfänglich durch die in den Deckel (19) eingebaute Germaniumscheibe (20) verläuft.

## Patentansprüche

1. Rotationsmischer (2), der eine Vorrichtung zur Temperaturbestimmung (1) von in dem Rotationsmischer (2) befindlichem Mischgut (13) aufweist, mit einem ortsfesten Gehäuse (3) und mit einem auf einer Kreisbahn (14) in verschiedene Rotationspositionen um eine Hauptrotationsachse (16) beweglichen Mischbehältnis (10), das eine Mischgutaufnahme (9) mit einem Boden (7) und einer Seitenwandung (8) aufweist und als Rotationskörper mit einer schräg zu der Ebene (15) der Kreisbahn (14) und orthogonal zu dem Boden (7) angeordneten Symmetrieachse (11) ausgeführt ist, wobei das Mischbehältnis (10) um die Symmetrieachse (11) drehbar gelagert ist und in einem Ruhezustand (R) kein Mischgut (13) aufweist und in einem Arbeitszustand (A) mit Mischgut (13) befüllt auf der Kreisbahn (14) rotiert,
**dadurch gekennzeichnet,**
**dass** an dem Gehäuse (3) ein berührungslos messender Strahlungsdetektor (4) ortsfest angeordnet ist, der auf die Kreisbahn (14) gerichtet ist.

2. Rotationsmischer (2) nach Anspruch 1,
**dadurch gekennzeichnet,**
das der Strahlungsdetektor (4) einen Strahlungssensor (5) aufweist, auf den eine einfallende Strahlung fokussiert ist, und das Ausmaß der von dem Strahlungsdetektor (4) maximal erfassten Fläche als Messfleck (18) auf dem Mischgut (13) proportional abhängig ist von dem Abstand zwischen dem Strahlungsdetektor (4) und dem Mischgut (13).

3. Rotationsmischer (2) nach einem der vorhergehenden Ansprüche,
**dadurch gekennzeichnet,**
**dass** der Messfleck (18) in dem Ruhezustand (R) in wenigstens einer Rotationsposition vollständig in der oberen Hälfte der Oberfläche des Bodens (7) innerhalb der Mischgutaufnahme (9) liegt und in dem Arbeitszustand (A) wenigstens ein Teil des Mischguts (13) in einer oder mehreren Rotationspositionen vollständig in den Strahlengang (17) des Strahlungsdetektors (4) eingebracht ist.

4. Rotationsmischer (2) nach Anspruch 3,
**dadurch gekennzeichnet,**
**dass** der Messfleck (18) kreisförmig ist und einen Durchmesser aufweist, der nicht größer als der Radius des Bodens (7) der Mischgutaufnahme (9) ist.

5. Rotationsmischer (2) nach einem der vorhergehenden Ansprüche,
**dadurch gekennzeichnet,**
**dass** der Strahlungsdetektor (4) mit einer Datenverarbeitungseinheit verbunden ist.

6. Rotationsmischer (2) nach einem der vorhergehenden Ansprüche,
**dadurch gekennzeichnet,**
**dass** der Strahlungsdetektor (4) Teil eines Pyrometers (6) ist.

7. Rotationsmischer (2) nach einem der vorhergehenden Ansprüche,
**dadurch gekennzeichnet,**
**dass** die Datenverarbeitungseinheit dazu eingerichtet ist, die von dem Strahlungsdetektor (4) empfangenen Dateneinheiten aufzuzeichnen, aus den Dateneinheiten Einzeltemperaturwerte zu errechnen sowie das jeweilige Maximum der Einzeltemperaturwerte in vorgegebenen Zeitabschnitten zu bestimmen.

8. Rotationsmischer (2) nach Anspruch 7,
**dadurch gekennzeichnet,**
**dass** die Datenverarbeitungseinheit dazu eingerichtet ist, die Einzeltemperaturwerte unter Vorgabe des Emissionsgrades des Mischguts (13) zu errechnen.

9. Rotationsmischer (2) nach einem der vorhergehenden Ansprüche,
**dadurch gekennzeichnet,**
**dass** das Mischbehältnis (10) einen verschließbaren Deckel (19) aufweist, in den eine Germaniumscheibe (20) eingebaut ist, die in wenigstens einer Rotationsposition des Mischbehältnisses (10) in dem Strahlengang (17) des Strahlungsdetektors (4) positioniert ist und so ausgeführt ist, dass sie keinen Einfluss auf die Messung mittels des Strahlungsdetektors (4) hat.

10. Rotationsmischer (2) nach einem der vorhergehenden Ansprüche,
**dadurch gekennzeichnet,**
**dass** das Mischgut (13) und der Strahlungsdetektor (4) in einem Raum angeordnet sind, der so abdichtbar ist, dass ein gleichmäßiger Unterdruck gegenüber Normaldruck in ihm erzeugbar ist, von dem das Mischgut (13) und der Strahlungsdetektor (4) gleichermaßen erfasst sind.

11. Verfahren zur Temperaturbestimmung mittels eines Rotationsmischers (1) nach einem der Ansprüche 1 bis 10,
**gekennzeichnet durch folgende Schritte:**
i) Befüllung des Mischbehältnisses (10) mit dem Mischgut (13) und Positionierung des Mischguts (13) im Strahlengang (17) des Strahlungsdetektors (4) mit anschließender Bestimmung der Temperatur des Mischguts (13) in Ruhe als T₀ mittels der Datenverarbeitungseinheit;
ii) Überführung der Vorrichtung (1) in den Arbeitszustand (A) mit einer Drehzahl der Rotation des Mischbehälters (10) auf der Kreisbahn (14) von mehr als einer vorbestimmten Anzahl von Umdrehungen pro Minute (rpm);
iii) punktuelle Messungen der Mischguttemperatur in regelmäßigen Zeitabständen;
iv) Bestimmung der maximal gemessenen Mischguttemperatur nach einer vorbestimmten Anzahl von Umdrehungen.

12. Verfahren nach Anspruch 11,
**gekennzeichnet durch folgenden zusätzlichen Schritt:**
v) Wiederholte Bestimmung der maximal gemessenen Mischguttemperatur jeweils nach einer vorbestimmten Anzahl von Umdrehungen.

13. Verfahren nach Anspruch 11 oder 12,
**gekennzeichnet durch**
die Aufzeichnung der bestimmten Temperaturmaxima als Graph.

14. Verfahren nach einem der Ansprüche 11 bis 13,
**dadurch gekennzeichnet,**
**dass** der Wert des in Millisekunden angegebenen Zeitabstands zwischen den punktuellen Messungen nicht größer ist als der Quotient aus dem Radius des Bodens (12) der Mischgutaufnahme (9) und einem mit dem Umfang der Kreisbahn (14) multiplizierten 60.000stel der Drehzahl (rpm).

## Claims

1. A rotary mixer (2), comprising:
a device (1) for determining a temperature of a mixed material (13) in said rotary mixer (2);
a stationary housing (3);
a mixing container (10) that can be moved on a circular path (14) into different rotational positions about a main axis of rotation (16), the mixing container having
a mixied material receptacle (9) with
a bottom (7) and
a side wall (8),
wherein the mixed material receptacle (9) is in form of a solid of revolution with an axis of symmetry (11) arranged obliquely to a plane (15) of the circular path (14) and orthogonally to the bottom (7); and
wherein the mixing container (10) is rotably mounted about the axis of symmetry (11) and
wherein the mixing container (10) in an idle state (R) has no mixed material (13) and in an operating state (A) the mixing container (10) filled with mixed material (13) rotates on the circular path (14)
**characterized in**
**that** a non-contact measuring radiation detector (4) is arranged in a stationary manner on the housing (3) and is directed towards the circular path (14).

2. The rotary mixer (2) according to claim 1,
**characterized in**
**that** the radiation detector (4) has a radiation sensor (5) on which incident radiation is focused, and the extent of the maximum area detected by the radiation detector (4) as a measuring spot (18) on the mixed material (13) is proportionally dependent on the distance between the radiation detector (4) and the mixed material (13).

3. The rotary mixer (2) according to one of the preceding claims,
**characterized in**
**that** the measuring spot (18) in the idle state (R) is completely in the upper half of the surface of the bottom (7) within the mixed material receptacle (9) and in the operating state (A) at least part of the mixed material (13) is completely introduced into the beam path (17) of the radiation detector (4) in one or more rotational positions.

4. The rotary mixer (2) according to claim 3,
**characterized in**
**that** the measuring spot (18) is circular and has a diameter that is not larger than the radius of the bottom (7) of the mixed material receptacle (9).

5. The rotary mixer (2) according to one of the preceding claims,
**characterized in**
**that** the radiation detector (4) is connected to a data processing unit.

6. The rotary mixer (2) according to one of the preceding claims,
**characterized in**
**that** the radiation detector (4) is part of a pyrometer (6).

7. The rotary mixer (2) according to one of the preceding claims,
**characterized in**
**that** the data processing unit is set up to record the data units received by the radiation detector (4), to calculate individual temperature values from the data units and to determine the respective maximum of the individual temperature values in predetermined time periods.

8. The rotary mixer (2) according to claim 7,
**characterized in**
**that** the data processing unit is configured to calculate the individual temperature values by specifying the emissivity of the mixed material (13).

9. The rotary mixer (2) according to one of the preceding claims,
**characterized in**
**that** the mixing container (10) has a closable lid (19), in which a germanium disk (20) is installed, which is positioned in at least one rotational position of the mixing container (10) in the beam path (17) of the radiation detector (4) and is so designed that it has no influence on the measurement using the radiation detector (4).

10. The rotary mixer (2) according to one of the preceding claims,
**characterized in**
**that** the mixed material (13) and the radiation detector (4) are arranged in a space which can be sealed in such a way that a uniform negative pressure compared to normal pressure can be generated therein, to which the mixed material (13) and the radiation detector (4) are equally exposed.

11. Method for determining temperature using a rotary mixer (2) according to one of claims 1 to 10,
**characterized by the following steps:**
i) filling the mixing container (10) with the mixed material (13) and positioning the mixed material (13) in the beam path (17) of the radiation detector (4) with subsequent determination of the temperature of the mixed material (13) at rest as T₀ using the data processing unit;
ii) transferring the rotary mixer (2) into the operating state (A) with a speed of rotation of the mixing container (10) on the circular path (14) of more than a predetermined number of revolutions per minute (rpm);
iii) selective measurements of the mixed material temperature at regular time intervals;
iv) determination of the maximum measured mixed material temperature after a predetermined number of revolutions.

12. Method according to claim 11,
**characterized by the following additional step:**
v) Repeated determination of the maximum measured mixed material temperature after a predetermined number of revolutions.

13. Method according to claim 11 or 12,
**characterized by**
the recording of the specific temperature maxima as a graph.

14. Method according to one of claims 11 to 13,
**characterized in**
**that** the value of the time interval between the point measurements specified in milliseconds is not greater than the quotient of the radius of the bottom (12) of the mixed material receptacle (9) and a 60,000th of the speed (rpm) multiplied by the circumference of the circular path (14).

## Revendications

1. Mélangeur rotatif (2), qui comporte un dispositif pour la détermination de température (1) d'un produit de mélange (13) se trouvant dans le mélangeur rotatif (2) avec une enceinte (3) fixe et avec un conteneur de mélange (10) mobile sur une trajectoire circulaire (14) dans différentes positions de rotation autour d'un axe de rotation principal (16), qui comporte un logement de produit de mélange (9) avec un fond (7) et une paroi latérale (8) et est exécuté sous la forme d'un corps de rotation avec un axe de symétrie (11) disposé incliné par rapport au plan (15) de la trajectoire circulaire (14) et de façon orthogonale par rapport au fond (7), sachant que le conteneur de mélange (10) est logé pouvant tourner autour de l'axe de symétrie (11) et ne comporte aucun produit de mélange (13) dans un état de repos (R) et tourne dans un état de fonctionnement (A) sur la trajectoire circulaire (14) rempli de produit de mélange (13),
**caractérisé en ce qu'**
un détecteur de rayonnement (4) mesurant sans contact est disposé fixement sur l'enceinte (3), qui est dirigé sur la trajectoire circulaire (14) .

2. Mélangeur rotatif (2) selon la revendication 1,
**caractérisé en ce que**
le détecteur de rayonnement (4) comporte un capteur de rayonnement (5), sur lequel est concentré un rayonnement incident et l'ampleur de la surface saisie au maximum par le détecteur de rayonnement (4) en tant que point de mesure (18) sur le produit de mélange (13) dépend proportionnellement de l'intervalle entre le détecteur de rayonnement (4) et le produit de mélange (13).

3. Mélangeur rotatif (2) selon l'une quelconque des revendications précédentes ,
**caractérisé en ce que**
la point de mesure (18) se situe à l'état de repos (R) dans au moins une position de rotation complètement dans la moitié supérieure du fond (7) à l'intérieur du logement de produit de mélange (9) et à l'état de fonctionnement (A) au moins une partie du produit de mélange (13) est introduite dans une ou plusieurs positions de rotation complètement dans la trajectoire de faisceau (17) du détecteur de rayonnement (4).

4. Mélangeur rotatif (2) selon la revendication 3,
**caractérisé en ce que**
le point de mesure (18) est de forme circulaire et comporte un diamètre, qui n'est pas plus grand que le rayon du fond (7) du logement de produit de mélange (9).

5. Mélangeur rotatif (2) selon l'une quelconque des revendications précédentes ,
**caractérisé en ce que**
le détecteur de rayonnement (4) est relié à une unité de traitement de données.

6. Mélangeur rotatif (2) selon l'une quelconque des revendications précédentes ,
**caractérisé en ce que**
le détecteur de rayonnement (4) est une partie d'un pyromètre (6) .

7. Mélangeur rotatif (2) selon l'une quelconque des revendications précédentes ,
**caractérisé en ce que**
l'unité de traitement de données.est agencée pour enregistrer les unités de données reçues du détecteur de rayonnement (4), calculer des valeurs de température individuelles à partir des unités de données ainsi que déterminer le maximum respectif des valeurs de température individuelles dans des intervalles de temps prédéfinis.

8. Mélangeur rotatif (2) selon la revendication 7,
**caractérisé en ce que**
l'unité de traitement de données est agencée pour calculer les valeurs de température individuelles sous couvert du degré d'émission du produit de mélange (13).

9. Mélangeur rotatif (2) selon l'une quelconque des revendications précédentes ,
**caractérisé en ce que**
le conteneur de mélange (10) comporte un couvercle fermable (19), dans lequel est incorporée une rondelle de germanium (20), qui est positionnée dans au moins une position de rotation du conteneur de mélange (10) dans la trajectoire de faisceau (17) du détecteur de rayonnement (4) et est exécuté de telle sorte qu'il n'a aucun effet sur la mesure au moyen du détecteur de rayonnement (4).

10. Mélangeur rotatif (2) selon l'une quelconque des revendications précédentes ,
**caractérisé en ce que**
le produit de mélange (13) et le détecteur de rayonnement (4) sont disposés dans un espace, qui peut être étanchéifié de telle manière qu'une dépression uniforme peut être produite dans celui-ci par rapport à une pression normale, à partir de laquelle le produit de mélange (13) et le détecteur de rayonnement (4) sont saisis de la même manière.

11. Procédé de détermination de température au moyen d'un mélangeur rotatif (2) selon l'une quelconque des revendications 1 à 10,
**caractérisé par les étapes suivantes :**
i) remplissage du conteneur de mélange (10) avec du produit de mélange (13) et positionnement du produit de mélange (13) dans la trajectoire de faisceau (17) du détecteur de rayonnement (4) avec détermination consécutive de la température du produit de mélange (13) au repos en tant que T₀ au moyen de l'unité de traitement de données,
ii) transfert du mélangeur rotatif (2) à l'état de fonctionnement (A) avec un nombre de tours de rotations du conteneur de mélange (10) sur la trajectoire circulaire (14) de plus d'un nombre prédéterminé de tours par minute (tpmin);
iii) mesures ponctuelles de la température du produit de mélange à des intervalles de temps réguliers,
iv) détermination de la température de produit de mélange mesurée au maximum après un nombre prédéterminé de tours.

12. Procédé selon la revendication 11,
**caractérisé par l'étape supplémentaire suivante :**
v) détermination répétée de la température de produit de mélange mesurée au maximum respectivement après un nombre prédéterminé de révolutions.

13. Procédé selon la revendication 11 oder 12,
**caractérisé par**
l'enregistrement des maxima de température déterminés sous la forme de graphique.

14. Procédé selon l'une quelconque des revendications 11 à 13,
**caractérisé en ce que**
la valeur de l'intervalle de temps indiqué en millisecondes entre les mesures ponctuelles n'est pas plus grand que le quotient obtenu à partir du rayon du fond (12) du logement de produit de mélange (9) et un 60 000ème du nombre de tours (tpmin) multiplié par la périphérie de la trajectoire circulaire (14).
